# EUROPÄISCHE PATENTSCHRIFT

(11) **EP 0 388 856 B1**
(45) Veröffentlichungstag und Bekanntmachung des Hinweises auf die Patenterteilung: **08.06.1994**
(21) Anmeldenummer: 90105146.6
(22) Anmeldetag: 19.03.1990
(51) Int. Cl.: H04Q 3/52

(54) **Breitbandsignal-Koppeleinrichtung**
Coupling device for broad-band signals
Dispositif de couplage pour signaux à large bande

(30) Priorität: 22.03.1989 DE 3909550
(43) Veröffentlichungstag der Anmeldung: 26.09.1990
(73) Patentinhaber: SIEMENS AKTIENGESELLSCHAFT, 80333 München (DE)
(72) Erfinder: Hofmann, Rüdiger, Dr., D-8031 Gilching (DE)

(56) Entgegenhaltungen:
- EP-A- 0 262 479
- EP-A- 0 264 046
- EP-A- 0 345 623

## Beschreibung

Läßt sich die ECL-Technik durch Eigenschaften wie hohe Arbeitsgeschwindigkeit, (mittel-)hoher Integrationsgrad und (mittel-) hohe Verlustleistung charakterisieren, so zeichnet sich die FET-Technik - bei demgegenüber allerdings nur mittleren Arbeitsgeschwindigkeiten - durch einen sehr hohen Integrationsgrad und sehr niedrige Verlustleistungen aus. Diese letzteren Eigenschaften führen zu dem Bemühen, mit integrierten Schaltungen in FET-Technik auch in bislang der Bipolar-Technik vorbehaltene Geschwindigkeitsbereiche vorzudringen.

Für eine Breitbandsignal-Koppeleinrichtung mit einer Koppelpunktmatrix, die jeweils mit zwei Signalleitern gebildete Matrixeingangsleitungen aufweist, welche einerseits jeweils an zwei Differenz-(Komplementär-)ausgänge einer Eingangsdigitalsignalschaltung angeschlossen sind und andererseits über Koppelpunkte mit ebenfalls jeweils mit zwei Signalleitern gebildeten Matrixausgangsleitungen verbindbar sind, welche jeweils mit ihren beiden Signalleitern zu den beiden Signaleingängen einer mit einem Differenzverstärker gebildeten Ausgangsverstärkerschaltung führen, ist in diesem Zusammenhang (aus EP-A-0 264 046) eine in FET-Technik ausgebildete Koppelpunktmatrix mit in den Koppelpunkten vorgesehenen, jeweils mit zwei jeweils an der Steuerelektrode mit einem Durchschalte-bzw. Sperrsignal beaufschlagten Schalter-Transistoren gebildeten Koppelelementpaaren bekannt, deren Schalter-Transistoren jeweils mit einer Hauptelektrode an den einen bzw. anderen Signalleiter der zugehörigen Matrixausgangsleitung angeschlossen sind, die ihrerseits mit einem Ausgangs-Differenzverstärker mit Kippverhalten versehen ist, wobei die Koppelelementpaare jeweils zwei jeweils mit einem Schalter-Transistor eine Serienschaltung bildende Vorschalt-Transistoren aufweisen,
die jeweils mit der Steuerelektrode an den einen bzw. den anderen Signalleiter der zugehörigen Matrixeingangsleitung angeschlossen sind und deren jeweilige der Serienschaltung abgewandte Hauptelektrode über einen Abtast-Transistor mit dem einen Anschluß (Masse) der Betriebsspannungsquelle verbunden ist, mit deren anderen Anschluß jeder Signalleiter der jeweiligen Matrixausgangsleitung jeweils über einen Vorlade-Transistor verbunden ist,
und wobei Vorlade-Transistoren und Abtast-Transistor gegensinnig zueinander jeweils an ihrer Steuerelektrode mit einem eine Bit-Durchschaltezeitspanne in eine Vorladephase und die eigentliche Durchschaltephase unterteilenden Koppelfeld-Ansteuer-Takt beaufschlagt sind, so daß in jeder Vorphase bei gesperrtem Abtast-Transistor beide Signalleiter der Matrixausgangsleitung über den jeweiligen Vorlade-Transistor zumindest angenähert auf das an dem genannten anderen Anschluss der Betriebsspannungsquelle herrschende Potential geladen werden.
Diese bekannte Breitbandsignal-Koppeleinrichtung bringt zusätzlich zu den Vorteilen, die mit einer in FET-Technik gehaltenen Koppelpunktmatrix verbunden sind, den weiteren Vorteil mit sich, daß einerseits - bei gesperrtem Koppelpunkt - auch ohne zusätzliche Dämpfungsmaßnahmen keine störende Signale über den Koppelpunkt zum Matrixausgang gelangen und daß andererseits - bei leitendem Koppelpunkt - bei der eigentlichen Bitdurchschaltung ggf. stattfindende Umladungen der Matrixausgangsleitung stets von dem dem einen Signalzustand entsprechenden einen Betriebspotential ausgehend in nur einer Umladerichtung vor sich gehen und somit bereits mit einer (dem Überschreiten einer diesem Betriebspotentialwert benachbarten, dem Kippunkt des Differenzverstärkers entsprechenden Schwelle entsprechenden) kleinen Umladung - und damit entsprechend schnell - ein eindeutiger Übergang des am Ausgang der Koppeleinrichtung auftretenden, durchgeschalteten Digitalsignals von dem einen in den anderen Signalzustand verbunden ist.

Bei einer solchen Breitbandsignal-Koppeleinrichtung kann eine weitere Erhöhung der Arbeitsgeschwindigkeit dadurch ermöglicht werden, daß die beiden Vorlade-Transistoren an ihren der jeweiligen Matrixausgangsleitung zugewandten Hauptelektroden miteinander über einen Quertransistor verbunden sind, dessen Steuerelektrode mit den Steuerelektroden der Vorlade-Transistoren verbunden ist (EP-A-0 345 623, veröffentlicht am 13.12.89); dies bringt in Verbindung mit dem Vorteil einer Beschleunigung der Vorladung der Matrixausgangsleitungen den weiteren Vorteil einer sehr frühzeitigen Potentialsymmetrierung der Matrixausgangsleitungen mit sich, so daß auch entsprechend frühzeitig die Anfangsbedingungen für eine sichere Verstärkung durch einen nachfolgenden Differenzverstärker gegeben sind.

Eine weitere Erhöhung der Arbeitsgeschwindigkeit der Breitbandsignal-Koppeleinrichtung erhält man, wenn neben einem matrixeingangsleitungs-individuellen Abtast-Transistor ein matrixeingangsleitungs-individueller Vorlade-Transistor oder, alternativ dazu, neben einem matrixausgangsleitungs-individuellen Abtast-Transistor ein matrixausgangsleitungs-individueller Vorlade-Transistor vorgesehen ist (EP-A-0 345 623, veröffentlicht am 13.12.89).

Die hinsichtlich Verlustleistungsbedarf und Arbeitsgeschwindigkeit erreichbaren Vorteile einer solchen bekannten Breitband-Koppeleinrichtung, die jeweils mit zwei Signalleitern gebildete Matrixeingangsleitungen aufweist, sind mit einem entsprechenden Platzbedarf für solche jeweils zwei Signalleiter der Matrixeingangsleitungen verbunden. Die Erfindung zeigt demgegenüber einen Weg, diesen Platzbedarf merklich zu verringern.

Die Erfindung betrifft eine Breitbandsignal-Koppeleinrichtung mit einer Koppelpunktmatrix in FET-Technik, deren Matrixeingangsleitungen über jeweils mit Koppelelementpaaren gebildete Koppelpunkte mit jeweils mit zwei Signalleitern gebildeten Matrixausgangsleitungen verbindbar sind, an deren beiden Signalleiter jeweils die beiden Signaleingänge einer mit einem Differenzverstärker mit Kippverhalten gebildeten Ausgangsverstärkerschaltung anschließbar sind,
wobei die Koppelelementpaare jeweils mit zwei jeweils an der Steuerelektrode mit einem Durchschalte- bzw. Sperrsignal beaufschlagten und mit einer Hauptelektrode an den einen bzw. anderen Signalleiter der zugehörigen Matrixausgangsleitung angeschlossenen Schalter-Transistoren und zwei jeweils mit einem Schalter-Transistor eine Serienschaltung bildenden Vorschalt-Transistor gebildet sind,
die jeweils mit der Steuerelektrode an einen Signalleiter der zugehörigen Matrixeingangsleitung angeschlossen sind und deren jeweilige der Serienschaltung abgewandte Hauptelektrode über einen koppelelement-, matrixeingangsleitungs- oder matrixausgangsleitungs-individuellen Abtast-Transistor mit dem einen Anschluß der Betriebsspannungsquelle verbunden ist, mit deren anderen Anschluß jeder Signalleiter der jeweiligen Matrixausgangsleitung jeweils über einen Vorlade-Transistor verbunden ist,
wobei Vorlade-Transistoren und Abtast-Transistor gegensinnig zueinander jeweils an ihrer Steuerelektrode mit einem eine Bit-Durchschaltezeitspanne in eine Vorladephase und die eigentliche Durchschaltephase unterteilenden Koppelfeld-Ansteuer-Takt beaufschlagt sind, so daß in jeder Vorphase bei gesperrtem Abtast-Transistor beide Signalleiter der Matrixausgangsleitung über den jeweiligen Vorlade-Transistor zumindest angenähert auf das an dem genannten anderen Anschluss der Betriebsspannungsquelle herrschende Potential geladen werden,
und wobei die beiden Vorlade-Transistoren an ihren der jeweiligen Matrixausgangsleitung zugewandten Hauptelektroden miteinander über einen Quertransistor verbunden sind, dessen Steuerelektrode mit den Steuerelektroden der Vorlade-Transistoren verbunden ist; diese Breitbandsignal-Koppeleinrichtung ist erfindungsgemäß dadurch gekennzeichnet, daß die Koppelelementpaare jeweils zwei Vorschalt-Transistoren unterschiedlichen Kanaltyps aufweisen, die mit ihrer Steuerelektrode an ein und denselben Signalleiter der zugehörigen Matrixeingangsleitung angeschlossen sind.

Die Erfindung bringt den Vorteil mit sich, je Matrixeingangsleitung nur einen einzigen Signalleiter - mit entsprechend verringertem Platzbedarf - zu benötigen, zugleich aber die sonstigen Besonderheiten und vorteilhaften Eigenschaften der eingangs erwähnten bekannten Breitband-Koppeleinrichtung beizubehalten.

Eine noch deutlichere Verringerung des Flächenbedarfs erzielt man, wenn in weiterer Ausgestaltung der Erfindung die Koppelelementpaare jeweils zwei Schalter-Transistoren unterschiedlichen Kanaltyps aufweisen, die jeweils mit einem Vorschalt-Transistor desselben Kanaltyps eine Serienschaltung bilden.

Um dabei eine unsymmetrische Belastung der beiden Signalleiter der Matrixausgangsleitungen und damit auch eine unsymmetrische Belastung der beiden Eingänge eines nachfolgenden Differenzverstärkers zu vermeiden, kann die Breitbandsignal-Koppeleinrichtung gemäß der Erfindung weiterhin dahingehend ausgestaltet sein, daß nur bei einem Teil der zu ein und derselben Matrixausgangsleitung führenden Koppelelementpaare jeweils die Transistor-Serienschaltung des einen Kanaltyps mit dem einen Signalleiter und die Transistor-Serienschaltung des anderen Kanaltyps mit dem anderen Signalleiter der Matrixausgangsleitung verbunden ist, während bei dem anderen Teil der zu der betreffenden Matrixausgangsleitung führenden Koppelelementpaare jeweils die Transistor-Serienschaltung des genannten anderen Kanaltyps mit dem genannten einen Signalleiter und die Transistor-Serienschaltung des genannten einen Kanaltyps mit dem genannten anderen Signalleiter der Matrixausgangsleitung verbunden ist; dies kann insbesondere in der Weise geschehen, daß in der einen bzw. in der anderen Weise mit den Signalleitern der zugehörigen Matrixausgangsleitung verbundene Koppelelementpaare in der betreffenden Matrixreihe abwechselnd aufeinanderfolgen.

Weitere Besonderheiten der Erfindung werden aus der nachfolgenden näheren Erläuterung der Erfindung anhand der Zeichnung ersichtlich. Dabei zeigt
- FIG 1: das Schema einer Breitbandsignal-Koppeleinrichtung gemäß der Erfindung;
- FIG 2, FIG 3 und FIG 4: zeigen Beispiele der schaltungstechnischen Realisierung ihrer Koppelelemente, und
- FIG 5: verdeutlicht Signalverläufe darin.

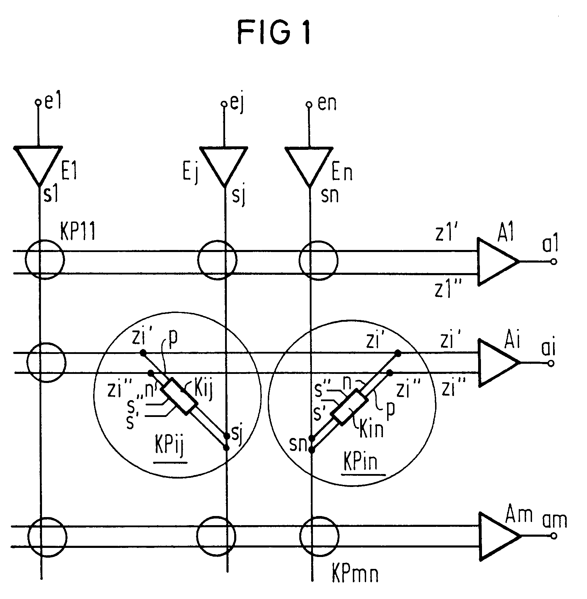

In der Zeichnung FIG 1 ist schematisch in zum Verständnis der Erfindung erforderlichem Umfange eine Breitbandsignal-Koppeleinrichtung skizziert, an deren zu Spaltenleitungen s1...sj...sn einer Koppelpunktmatrix führenden Eingängen e1...ej...en Eingangsdigitalsignalschaltungen E1...Ej...En vorgesehen sind und deren von Zeilenleitungen z1...zi...zm der Koppelpunktmatrix erreichte Ausgänge a1...ai...am mit Ausgangsverstärkerschaltungen A1...Ai...Am versehen sind. Die Koppelpunktmatrix weist Koppelpunkte KP11...KPij...KPmn auf, deren Koppelelemente, wie dies beim Koppelpunkt KPij für ein Koppelelementepaar Kij weiter ins Einzelne gehend angedeutet ist, jeweils an Steuereingängen s′, s˝ von einem (in der Zeichnung nicht mehr dargestellten) Adressendecoderelement oder Halte-Speicherelement gesteuert sein können, was hier indessen nicht weiter erläutert werden muss, da derartige Ansteuerungen von Koppelelementen allgemein bekannt sind und entsprechende Erläuterungen sich im übrigen auch schon an anderer Stelle finden (EP-A1-0 262 479).

Die jeweils mit nur einem Signalleiter gebildeten Matrixeingangsleitungen (Spaltenleitungen) sind über mit Koppelelementepaaren (Kij beim Koppelpunkt KPij in FIG 1) gebildete Koppelpunkte KP11,...,KPij,...,KPnm mit Matrixausgangsleitungen (Zeilenleitungen) verbunden, die jeweils mit zwei Signalleitern z1′,z1˝; ...;zi′,zi˝; .. .;zm′,zm˝ gebildet sind und mit diesen jeweils zu den beiden Signaleingängen einer mit einem Differenzverstärker mit Kippverhalten gebildeten Ausgangsverstärkerschaltung A1,.., Ai,...,Am führen.

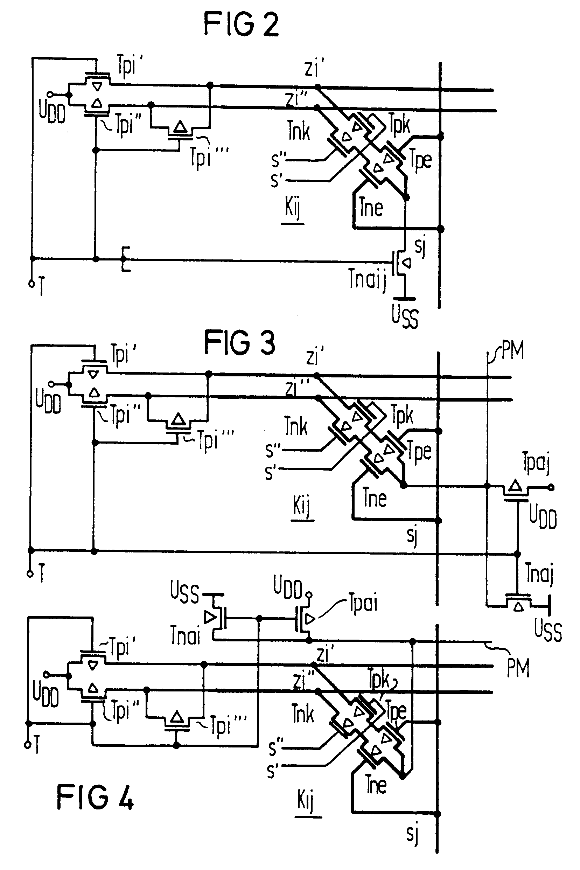

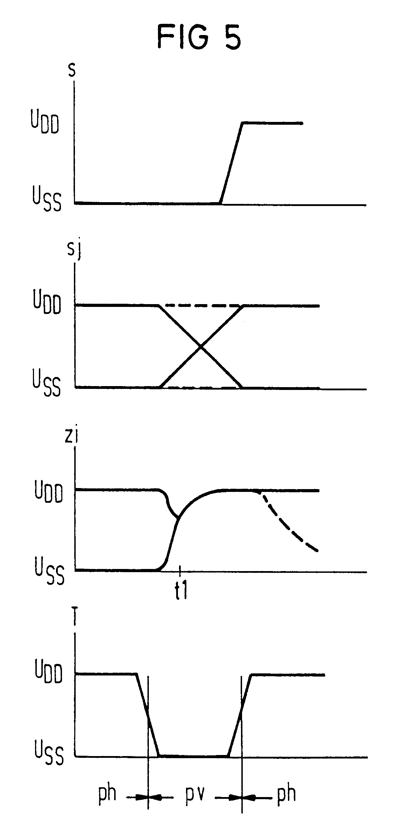

Ein solcher Differenzverstärker mit Kippverhalten kann mit einem sog. gated flip-flop realisiert werden, wie es im Prinzip (aus |a| IEEE Journal of Solid-State Circuits, Oct. 1973, 319...323, Fig. 6) und auch schon in verschiedenen Modifikationen (beispielsweise aus |b| DE-OS 24 22 136, Fig.3 (16′) und aus |c| DE-OS 26 08 119, FIG. 5) bekannt ist, wobei ein dort vorgesehener Symmetriertransistor (in|a|und |b|) ebenso wie dort vorgesehene Vorladetransistoren (in|b|) bzw. Lasttransistoren (in |c|) zweckmäßigerweise als p-Kanal-Transistor auszubilden ist; eine weitere Realisierungsmöglichkeit ist aus EP-A-0 264 046, FIG 5, bekannt.

Wie die Koppelelementepaare ...Kij... schaltungstechnisch realisiert sein können, wird in FIG 2, FIG 3 und FIG 4 verdeutlicht: Die Koppelelementepaare ... Kij... sind jeweils mit zwei jeweils an der Steuerelektrode mit einem Durchschalte- bzw. Sperrsignal beaufschlagten und mit einer Hauptelektrode an den einen bzw. den anderen Signalleiter zi′,zi˝ der zugehörigen Matrixausgangsleitung angeschlossenen Schalter-Transistoren Tpk, Tnk und zwei jeweils mit einem Schalter-Transistor Tpk bzw. Tnk eine Serienschaltung bildenden Vorschalt-Transistoren Tpe und Tne unterschiedlichen Kanaltyps gebildet, die jeweils mit der Steuerelektrode an den (einzigen) Signalleiter sj der zugehörigen Matrixeingangsleitung (Spaltenleitung) ... sj... angeschlossen sind; sind dabei, wie dies aus FIG 2, FIG 3 und FIG 4 ersichtlich ist, auch die beiden Schalter-Transistoren Tpk, Tnk von unterschiedlichem Kanaltyp, so bilden jeweils ein Schalter-Transistor Tpk (bzw. Tnk) und ein Vorschalt-Transistor Tpe (bzw. Tne) desselben Kanaltyps eine Serienschaltung. Mit ihrer der Serienschaltung abgewandten Hauptelektrode sind die Vorschalt-Transistoren Tpe und Tne über einen Abtast-Transistor Tna (nämlich Tnaij in FIG 2 bzw. Tnaj in FIG 3 bzw. Tnai in FIG 4) mit dem einen Anschluß U_{SS} (Masse) der Betriebsspannungsquelle verbunden. Mit dem anderen Anschluß U_{DD} der Betriebsspannungsquelle sind die beiden Signalleiter (zi′,zi˝) der jeweiligen Matrixausgangsleitung (Zeilenleitung) ...zi... jeweils über einen Vorlade-Transistor Tpi′ bzw. Tpi˝ verbunden; an ihren der jeweiligen Matrixausgangsleitung (zi′, zi˝) zugewandten Hauptelektroden sind die beiden Vorlade-Transistoren Tpi′, Tpi˝ miteinander über einen Quertransistor Tpi‴ verbunden, dessen Steuerelektrode mit den Steuerelektroden der Vorlade-Transistoren Tpi′, Tpi˝ verbunden ist.

Wie dies auch FIG 2 verdeutlicht, kann jeweils ein koppelelementepaar-individueller Abtast-Transistor Tnaij vorgesehen sein; alternativ kann aber auch, wie dies FIG 3 zeigt, jeweils für alle an ein und derselben Matrixeingangsleitung (Spaltenleitung) ..sj.. liegenden Koppelelementepaare ein gemeinsamer und damit matrixeingangsleitungs-individueller Abtast-Transistor (Tnaj in FIG 3) vorgesehen sein, oder es kann, wie die aus FIG 4 ersichtlich ist, jeweils ein allen an ein und derselben Matrixausgangsleitung (Zeilenleitung) ...zi... liegenden Koppelelementepaaren gemeinsamer und damit matrixausgangsleitungs-individueller Abtast-Transistor (Tnai in FIG 4) vorgesehen sein. Dabei kann, wie dies aus FIG 3 ersichtlich wird, neben einem matrixeingangsleitungs-individuellen Abtast-Transistor Tnaj ein matrixeingangsleitungs-individueller Vorlade-Transistor Tpaj vorgesehen sein, und es kann, wie dies aus FIG 4 ersichtlich wird, neben einem matrixausgangsleitungs-individuellen Abtast-Transistor Tnai ein matrixausgangsleitungs-individueller Vorlade-Transistor Tpai vorgesehen sein.

Wie dies auch in FIG 2 bis FIG 4 angedeutet ist, können in der in CMOS-Technik gehaltenen Koppelpunktmatrix jeweils der Schalter-Transistor Tnk und der Vorschalt-Transistor Tne der einen Serienschaltung Tne-Tnk ebenso wie der zugehörige Abtast-Transistor Tna n-Kanal-Transistoren sein, während der Schalter-Transistor Tpk und der Vorschalt-Transistor Tpe der anderen Serienschaltung Tpe-Tpk ebenso wie die Vorlade-Transistoren Tpi p-Kanal-Transistoren sind.

Da p-Kanal-Transistoren (bei gleicher Stromausbeute) doppelt so breit ausgelegt sein müssen wie n-Kanal-Transistoren, ist es - zur Vermeidung hieraus resultierender unsymmetrischer Belastungen der beiden Signalleiter zi′,zi˝ einer Matrixausgangsleitung - bei der aus FIG 2 bis FIG 4 ersichtlichen Realisierung der Koppelelementepaare mit jeweils zwei Transistor-Serienschaltungen unterschiedlichen Kanaltyps zweckmäßig, daß nur bei einem Teil der zu ein und derselben Matrixausgangsleitung führenden Koppelelementepaare die Transistor-Serienschaltung (Tpe, Tpk) des einen Kanaltyps mit dem einen Signalleiter (zi′) und die Transistor-Serienschaltung (Tne, Tnk) des anderen Kanaltyps mit dem anderen Signalleiter (zi˝) der Matrixausgangsleitung verbunden ist, während bei dem anderen Teil der zu der betreffenden Matrixausgangsleitung führenden Koppelelementepaare die Transistor-Serienschaltung (Tne, Tnk) des genannten anderen Kanaltyps mit dem genannten einen Signalleiter (zi′) und die Transistor-Serienschaltung (Tpe, Tpk) des genannten einen Kanaltyps mit dem genannten anderen Signalleiter (zi˝) der Matrixausgangsleitung verbunden ist; insbesondere können dabei in der einen bzw. in der anderen Weise mit den Signalleitern der zugehörigen Matrixausgangsleitung verbundene Koppelelementepaare in der betreffenden Matrixreihe abwechselnd aufeinanderfolgen.

Solche abwechselnd aufeinanderfolgende Koppelelemente sind auch in FIG 1 angedeutet: Beim Koppelpunkt KPij ist der Ausgang p der p-Kanal-Transistor-Serienschaltung (Tpe-Tpk in FIG 2) an den einen Signalleiter zi′ der zugehörigen Matrixausgangsleitung angeschlossen und der Ausgang n der n-Kanal-Transistor-Serienschaltung (Tne-Tnk in FIG 2) an den anderen Signalleiter zi˝. In FIG 1 ist dann angedeutet, daß in entsprechender Weise auch die übrigen an der Matrixeingangsleitung sj liegenden Koppelpunkte an die übrigen Matrixausgangsleitungen angeschlossen sind. Zugleich ist in FIG 1 angedeutet, daß bei den an der Matrixeingangsleitung sn liegenden Koppelpunkten die Koppelelement-Ausgänge in umgekehrtem Sinne an die beiden Signalleiter der jeweiligen Matrixausgangsleitung angeschlossen sind: Wie dies in FIG 1 für den Koppelpunkt KPin genauer dargestellt ist, ist in dieser Matrixspalte jeweils der Ausgang n (siehe auch FIG 2) der n-Kanal-Transistor-Serienschaltung des jeweiligen Koppelelementepaars (z.B. Kin) mit dem einen Signalleiter (zi′ in FIG 1) verbunden, während der Ausgang p (siehe auch FIG 2) der p-Kanal-Transistor-Serienschaltung des jeweiligen Koppelelementepaars (z.B. Kin) mit dem anderen Signalleiter (zm˝ in FIG 1) der jeweiligen Matrixausgangsleitung verbunden ist. In entsprechender Weise können die Koppelelemente aller von unterschiedlichen Matrixeingangsleitungen s1...sn (in FIG 1) zu ein und derselben Matrixausgangsleitung (z.B. zi′, zi˝) führenden Koppelpunkte mit ihrem n-Kanal-Zweig von Matrixspalte zu Matrixspalte abwechselnd an den einen Signalleiter (zi′) und den anderen Signalleiter (zi˝) der betreffenden Matrixausgangsleitung und mit ihrem p-Kanal-Zweig abwechselnd an diesen anderen Signalleiter (zi˝) und den zuvor genannten einen Signalleiter (zi′) der betreffenden Matrixausgangsleitung angeschlossen sein.

In FIG 2 bis FIG 4 ist noch angedeutet, daß die Vorlade-Transistoren Tpi und die Abtast-Transistoren Tna gegensinnig zueinander jeweils an ihrer Steuerelektrode mit einem eine Bit-Durchschaltezeitspanne in in FIG 5, unten, angedeuteter Weise in eine Vorphase pv und eine Hauptphase ph unterteilenden Takt T beaufschlagt sind, wie er in FIG 5 in Zeile T angedeutet ist.

Während der Vorphase pv (siehe FIG 5, unten) werden jeweils die beiden Signalleiter (zi′,zi˝) der Matrixausgangsleitungen (Zeilenleitungen) ...zi... über den jeweiligen Vorlade-Transistor (Tpi′ bzw. Tpi˝ in FIG 2 bis FIG 4) zumindest angenähert auf das U_{DD}-Betriebspotential geladen, wozu die im Beispiel durch p-Kanal-Transistoren gebildeten Vorlade-Transistoren Tpi′, Tpi˝ im Beispiel durch ein "Low"-Taktsignal T (siehe FIG 5, Zeile T) leitend gemacht werden.
Dabei wird mit der fallenden Flanke des Taktsignals T zugleich auch der zwischen den beiden Signalleitern zi′, zi˝ liegende Quertransistor Tpi‴ leitend mit der Folge eines Kurzschlusses der beiden Signalleiter zi′, zi˝, aufgrund dessen es zu Beginn der Vorphase sehr schnell (Zeitpunkt t1 in FIG 5, Zeile zi) zunächst einmal zu einem Potentialausgleich der beiden Signalleiter zi′, zi˝ kommt; danach werden dann beide (nun potentialmäßig ausgeglichenen) Signalleiter zi′, zi˝ über die beiden Vorlade-Transistoren Tpi′, Tpi˝ auf das U_{DD}-Betriebspotential hin geladen, wobei sich die Ladedauer insgesamt dadurch verkürzt, daß nach dem durch den Quertransistor Tpi‴ herbeigeführten Potentialausgleich nun beide Vorlade-Transistoren Tpi′, Tpi˝ in den Aufladungsvorgang einbezogen sind.
Zugleich mit der Entriegelung der Vorlade-Transistoren Tpi′, Tpi˝ und des Quertransistors Tpi‴ werden die durch n-Kanal-Transistoren gebildeten Abtast-Transistoren Tna (Tnaj in FIG 2, Tnaj in FIG 3, Tnai in FIG 4) im Beispiel durch das gleiche "Low"-Taktsignal T im entgegengesetzten Sinne ausgesteuert, d.h. gesperrt, so daß die Aufladung der jeweils beiden Signalleiter (zi′, zi˝) der Matrixausgangsleitungen (Zeilenleitungen) ...zi... unabhängig von der Ansteuerung der jeweiligen Schalter-Transistoren Tpk,Tnk (in FIG 2 bis FIG 4) und der jeweiligen Vorschalt-Transistoren Tpe,Tne (in FIG 2 bis FIG 4) der einzelnen Koppelelementepaare ...Kij... vor sich gehen kann. Auf der jeweiligen Matrixeingangsleitung (Spaltenleitung) ...sj... kann sich dabei ggf. schon das dem jeweils durchzuschaltenden Bit entsprechende Potential aufbauen (bzw. beibehalten werden), wie dies Zeile sj in FIG 5 verdeutlicht.
Ist neben einem matrixeingangsleitungs-individuellen Abtast-Transistor Tnaj ein matrixeingangsleitungs-individueller Vorlade-Transistor Tpaj vorgesehen, wie dies in FIG 3 dargestellt ist, oder ist neben einem matrixausgangsleitungs-individuellen Abtast-Transistor Tnai ein matrixausgangsleitungs-individueller Vorlade-Transistor Tpai vorgesehen, wie dies in FIG 4 dargestellt ist, so wird während der Vorphase pv über diesen Vorlade-Transistor (Tpaj in FIG 3; Tpai in FIG 4) die Pseudo-Masseleitung PM aufgeladen, womit das jeweilige Koppelelementepaar ...Kij... insoweit entlastet wird. Dies führt insbesondere bei umfangreichen Koppelpunktmatrizen mit einer Vielzahl von an die Pseudo-Masseleitung PM angeschlossenen Koppelelementepaaren ...Kij... zu einer merklichen Ladezeitverkürzung, die ihrerseits voll in eine entsprechende Erhöhung der Arbeitsgeschwindigkeit eingeht.

Aufgrund der durch den Quertransistor Tpi‴ herbeigeführten Potentialgleichheit der beiden Signalleiter zi′, zi˝ sind die Anfangsbedingungen für eine sichere Verstärkung durch den Differenzverstärker Ai (in FIG 1) entsprechend früher gegeben, so daß bereits zu einem entsprechend früheren Zeitpunkt die darauffolgende Hauptphase ph (siehe FIG 5, unten) einsetzen kann. In dieser Hauptphase ph (siehe FIG 5, unten), werden im Beispiel durch ein "High"-Taktsignal T (siehe FIG 5 Zeile T) Vorlade-Transistoren Tpi′ ,Tpi˝ und Quertransistor Tpi‴ (in FIG 2 bis FIG 4) gesperrt und zugleich die Abtast-Transistoren Tna (Tnaij in FIG 2, Tnaj in FIG 3, Tnai in FIG 4) entriegelt. Sind nun in einem Koppelelementepaar ...Kij... dessen Schalt-Transistoren Tpk, Tnk (in FIG 2 bis FIG 4) aufgrund eines am Steuereingang s′ anliegenden (im Beispiel "Low"-)Durchschaltesignals und eines am Steuereingang s˝ anliegenden (im Beispiel "High"-)Durchschaltesignals (siehe FIG 5, Zeile s) leitend und befindet sich damit der Koppelpunkt im Durchschaltezustand, so werden jetzt je nach dem dem durchzuschaltenden Bit entsprechenden, auf der betreffenden Matrixeingangsleitung (Spaltenleitung) ...sj... herrschenden Signalzustand die Signalleiter zi′,zi˝ der mit dieser Matrixeingangsleitung (Spaltenleitung) ... sj... über das betreffende Koppelelement ..Kij.. verbundene Matrixausgangsleitung (Zeilenleitung) ...zi... entladen werden bzw. auf dem in der Vorphase pv angenommenen U_{DD}-Potential verbleiben:
Herrscht auf der betreffenden Matrixeingangsleitung (Spaltenleitung) sj der "Low"-Signalzustand und ist dementsprechend der n-Kanal-Vorschalt-Transistor Tne (in FIG 2 bis FIG 4) des betreffenden Koppelelementepaares Kij gesperrt, so wird der betreffende Signalleiter zi˝ der Matrixausgangsleitung (Zeilenleitung) zi über das betreffende Koppelelement dieses Koppelelementepaares Kij nicht entladen, sondern behält, sofern kein anderer zu dieser Matrixausgangsleitung (Zeilenleitung) zi führender Koppelpunkt sich im Durchschaltezustand befindet, den U_{DD}-Potentialzustand bei.
Gleichzeitig ist der Vorschalt-Transistor Tpe (in FIG 2 bis FIG 4) des betrachteten Koppelelementepaares Kij ebenso wie der Schalter-Transistor Tpk und der zugehörige Abtast-Transistor Tna leitend, so daß der zugeordnete Signalleiter zi′ der Matrixausgangsleitung (Zeilenleitung) zi über dieses Koppelelement des Koppelelementepaares Kij entladen und auf das U_{SS}-Potential gezogen wird.

Herrscht dagegen auf der gerade betrachteten Matrixeingangsleitung sj der "High"-Signalzustand und ist dementsprechend der n-Kanal-Vorschalt-Transistor Tne (in FIG 2 bis FIG 4) des betreffenden Koppelelementepaares Kij leitend, so wird der betreffende Signalleiter zi˝ der Matrixausgangsleitung (Zeilenleitung) zi über das betreffende Koppelelement dieses Koppelelementepaares Kij entladen und auf das U_{SS}-Potential gezogen.
Gleichzeitig ist dann der Vorschalt-Transistor Tpe (in FIG 2 bis FIG 4) des betrachteten Koppelelementepaares Kij nichtleitend, so daß der zugeordnete Signalleiter zi′ der Matrixausgangsleitung (Zeilenleitung) über dieses Koppelelement des Koppelelementepaares Kij nicht entladen wird, sondern, sofern kein anderer zu dieser Matrixausgangsleitung (Zeilenleitung) zi führender Koppelpunkt sich im Durchschaltezustand befindet, den U_{DD}-Potentialzustand beibehält.

In den im vorstehenden anhand von FIG 2 bis FIG 4 erläuterten Ausführungsbeispielen sind die Vorlade-Transistoren (Tpi′, Tpi˝) durch p-Kanal-Transistoren gebildet, wobei diese p-Kanal-Vorlade-Transistoren (Tpi) und die durch n-Kanal-Transistoren gebildeten Abtast-Transistoren (Tna), durch den unterschiedlichen Kanaltypus bedingt, durch ein und dasselbe Signal (T) gegensinnig zueinander gesteuert werden. In Abweichung hiervon ist es aber auch möglich, die Vorlade-Transistoren mit n-Kanal-Transistoren zu realisieren, so daß, wenn auch die Schalter-Transistoren (Tnk), die Vorschalt-Transistoren (Tne) und die Abtast-Transistoren (Tna) n-Kanal-Transistoren sind, nur Transistoren ein und desselben Kanaltyps zur Anwendung kommen; damit dann Vorlade-Transistoren und Abtast-Transistoren wiederum gegensinnig zueinander jeweils an ihrer Steuerelektrode mit dem Koppelfeld-Ansteuer-Takt beaufschlagt werden, ist den Abtast-Transistoren (Tna) wiederum, wie in den anhand von FIG 2 bis FIG 4 beschriebenen Ausführungsbeispielen, das Koppelfeld-Ansteuer-Taktsignal (T) direkt zuzuführen, den (n-Kanal-)Vorlade-Transistoren dagegen das invertierte Koppelfeld-Ansteuer-Taktsignal.

## Patentansprüche

1. Breitbandsignal-Koppeleinrichtung mit einer Koppelpunktmatrix in FET-Technik, deren Matrixeingangsleitungen (sj) über jeweils mit Koppelelementpaaren (Kij) gebildete Koppelpunkte (KPij) mit jeweils mit zwei Signalleitern (zi′, zi˝) gebildeten Matrixausgangsleitungen (zi) verbindbar sind, an deren beiden Signalleiter (zi′, zi˝) jeweils die beiden Signaleingänge einer mit einem Differenzverstärker mit Kippverhalten gebildeten Ausgangsverstärkerschaltung (Ai) anschließbar sind,
wobei die Koppelelementpaare (Kij) jeweils mit zwei jeweils an der Steuerelektrode mit einem Durchschalte- bzw. Sperrsignal beaufschlagten und mit einer Hauptelektrode an den einen bzw. anderen Signalleiter (zi′, zi˝) der zugehörigen Matrixausgangsleitung (zi) angeschlossenen Schalter-Transistoren (Tpk, Tnk) und zwei jeweils mit einem Schalter-Transistor (Tpk, Tnk) eine Serienschaltung bildenden Vorschalt-Transistoren (Tpe, Tne) gebildet sind,
die jeweils mit der Steuerelektrode an einen Signalleiter (sj) der zugehörigen Matrixeingangsleitung (sj) angeschlossen sind und deren jeweilige der Serienschaltung abgewandte Hauptelektrode über einen koppelelement-, matrixeingangsleitungs- oder matrixausgangsleitungs-individuellen Abtast-Transistor (Tna) mit dem einen Anschluß (U_{SS}, Masse) der Betriebsspannungsquelle verbunden ist, mit deren anderen Anschluß (U_{DD}) jeder Signalleiter (zi′, zi˝) der jeweiligen Matrixausgangsleitung (zi) jeweils über einen Vorlade-Transistor (Tpi′, Tpi˝) verbunden ist, wobei Vorlade-Transistoren (Tpi′, Tpi˝) und Abtast-Transistor (Tna) gegensinnig zueinander jeweils an ihrer Steuerelektrode mit einem eine Bit-Durchschaltezeitspanne in eine Vorladephase (pv) und die eigentliche Durchschaltephase (ph) unterteilenden Koppelfeld-Ansteuer-Takt (T) beaufschlagt sind, so daß in jeder Vorphase (pv) bei gesperrtem Abtast-Transistor (Tna) beide Signalleiter der Matrixausgangsleitung (zi) über den jeweiligen Vorlade-Transistor (Tpi′, Tpi˝) zumindest angenähert auf das an dem genannten anderen Anschluss (U_{DD}) der Betriebsspannungsquelle herrschende Potential geladen werden,
und wobei die beiden Vorlade-Transistoren (Tpi′, Tpi˝) an ihren der jeweiligen Matrixausgangsleitung (zi) zugewandten Hauptelektroden miteinander über einen Quertransistor (Tpi‴) verbunden sind, dessen Steuerelektrode mit den Steuerelektroden der Vorlade-Transistoren (Tpi′, Tpi˝) verbunden ist,
**dadurch gekennzeichnet,**
daß die Koppelelementpaare (Kij) jeweils zwei Vorschalt-Transistoren (Tpe, Tne) unterschiedlichen Kanaltyps aufweisen, die mit ihrer Steuerelektrode an ein und denselben Signalleiter (sj) der zugehörigen Matrixeingangsleitung (sj) angeschlossen sind.

2. Breitbandsignal-Koppeleinrichtung nach Anspruch 1,
**dadurch gekennzeichnet,**
daß die Koppelelementpaare (Kij) jeweils zwei Schalter-Transistoren (Tpk, Tnk) unterschiedlichen Kanaltyps aufweisen, die jeweils mit einem Vorschalt-Transistor (Tpe, Tne) desselben Kanaltyps eine Serienschaltung bilden.

3. Breitbandsignal-Koppeleinrichtung nach Anspruch 2,
**dadurch gekennzeichnet,**
daß nur bei einem Teil der zu ein und derselben Matrixausgangsleitung (zi) führenden Koppelelementpaare (Kij) die Transistor-Serienschaltung (Tpe, Tpk) des einen Kanaltyps mit dem einen Signalleiter (zi′) und die Transistor-Serienschaltung (Tne, Tnk) des anderen Kanaltyps mit dem anderen Signalleiter (zi˝) der Matrixausgangsleitung (zi) verbunden ist und bei dem anderen Teil der zu der betreffenden Matrixausgangsleitung (zi) führenden Koppelelementpaare die Transistor-Serienschaltung des genannten anderen Kanaltyps mit dem genannten einen Signalleiter (zi′) und die Transistor-Serienschaltung (Tne, Tnk) des genannten einen Kanaltyps mit dem genannten anderen Signalleiter (zi˝) der Matrixausgangsleitung (zi) verbunden ist.

4. Breitbandsignal-Koppeleinrichtung nach Anspruch 3,
**dadurch gekennzeichnet,**
daß in der einen bzw. in der anderen Weise mit den Signalleitern (zi′, zi˝) der zugehörigen Matrixausgangsleitung verbundene Koppelelementpaare in der betreffenden Matrixreihe abwechselnd aufeinanderfolgen.

5. Breitbandsignal-Koppeleinrichtung nach einem der Ansprüche 1 bis 4, **dadurch gekennzeichnet,**
daß neben einem matrixeingangsleitungs-individuellen Abtast-Transistor (Tnaj) ein matrixeingangsleitungs-individueller Vorlade-Transistor (Tpaj) vorgesehen ist.

6. Breitbandsignal-Koppeleinrichtung nach einem der Ansprüche 1 bis 4,
**dadurch gekennzeichnet,**
daß neben einem matrixausgangsleitungs-individuellen Abtast-Transistor (Tnai) ein matrixausgangsleitungs-individueller Vorlade-Transistor (Tpai) vorgesehen ist.

## Claims

1. Broadband signal switching network having a crosspoint matrix in FET technology, the matrix input lines (sj) of which can be connected via crosspoints (KPij) formed in each case by switching element pairs (Kij) to matrix output lines (zi) formed in each case by two signal conductors (zi', zi''), to the two signal conductors (zi', zi'') of which the two signal inputs of an output amplifier circuit (Ai) formed by a differential amplifier with trigger characteristics can be connected in each case, in which the switching element pairs (Kij) are formed in each case by two switching transistors (Tpk, Tnk) which receive a through-connect signal or inhibit signal at the control electrode in each case and are connected by a main electrode to the one or other signal conductor (zi', zi'') of the associated matrix output line (zi) and by two series transistors (Tpe, Tne) forming a series circuit with a switching transistor (Tpk, Tnk) in each case, which series transistors are connected by the control electrode in each case to a signal conductor (sj) of the associated matrix input line (sj), and the respective main electrode of said series transistors remote from the series circuit is connected via a switching-element-specific, matrix-input-line-specific or matrix-output-line-specific sampling transistor (Tna) to one terminal (U_{SS}, ground) of the operating voltage source, to the other terminal (U_{DD}) of which each signal conductor (zi', zi'') of the respective matrix output line (zi) is connected via a precharging transistor (Tpi', Tpi'') in each case, in which precharging transistors (Tpi', Tpi'') and sampling transistor (Tna) receive at their control electrodes in each case in opposite sense to one another a switching matrix selection clock signal (T) dividing a bit through-connection period into a precharging phase (pv) and the actual through-connection phase (ph), so that in every preliminary phase (pv) when the sampling transistor (Tna) is inhibited both signal conductors of the matrix output line (zi) are charged via the respective precharging transistor (Tpi', Tpi'') at least approximately to the potential prevailing at the aforesaid other terminal (U_{DD}) of the operating voltage source, and in which the two precharging transistors (Tpi', Tpi'') are connected to one another at their main electrodes facing the respective matrix output line (zi) via a shunt transistor (Tpi'''), the control electrode of which is connected to the control electrodes of the precharging transistors (Tpi', Tpi''), characterized in that the switching element pairs (Kij) have in each case two series transistors (Tpe, Tne) of different channel types which are connected by their control electrodes to one and the same signal conductor (sj) of the associated matrix input line (sj).

2. Broadband signal switching network according to Claim 1, characterized in that the switching element pairs (Kij) have in each case two switching transistors (Tpk, Tnk) of different channel types which form a series circuit with a series transistor (Tpe, Tne) of the same channel type in each case.

3. Broadband signal switching network according to Claim 2, characterized in that only for part of the switching element pairs (Kij) leading to one and the same matrix output line (zi) is the transistor series circuit (Tpe, Tpk) of the one channel type connected to the one signal conductor (zi') and the transistor series circuit (Tne, Tnk) of the other channel type connected to the other signal conductor (zi'') of the matrix output line (zi), and for the other part of the switching element pairs leading to the respective matrix output line (zi) the transistor series circuit of the aforesaid other channel type is connected to the aforesaid one signal conductor (zi') and the transistor series circuit (Tne, Tnk) of the aforesaid one channel type is connected to the aforesaid other signal conductor (zi'') of the matrix output line (zi).

4. Broadband signal switching network according to Claim 3, characterized in that switching element pairs connected to the signal conductors (zi', zi'') of the associated matrix output line in the one and in the other way respectively follow one another in alternating fashion in the respective matrix row.

5. Broadband signal switching network according to one of Claims 1 to 4, characterized in that in addition to a matrix-input-line-specific sampling transistor (Tnaj), a matrix-input-line-specific precharging transistor (Tpaj) is provided.

6. Broadband signal switching network according to one of Claims 1 to 4, characterized in that in addition to a matrix-output-line-specific sampling transistor (Tnai), a matrix-output-line-specific precharging transistor (Tpai) is provided.

## Revendications

1. Dispositif de couplage de signaux à large bande comportant une matrice de points de couplage réalisée selon la technique FET, dont les lignes d'entrée (sj) peuvent être reliées par l'intermédiaire de points de couplage respectifs (KPij) qui sont réalisés avec des couples (Kij) d'éléments de couplage, à des lignes de sortie (zi) de la matrice qui sont réalisées respectivement avec deux conducteurs de transmission de signaux (zi', zi'') et aux deux conducteurs de transmission de signaux (zi', zi'') desquelles peuvent être raccordées respectivement les deux entrées de signaux d'un circuit amplificateur de sortie (Ai) réalisé au moyen d'un amplificateur différentiel ayant un comportement de basculement,
dans lequel les couples (Kij) d'éléments de couplage sont formés respectivement par deux transistors formant interrupteurs (Tpk, Tnk), qui sont chargés, respectivement au niveau de l'électrode de commande, par un signal d'interconnexion ou de blocage et sont raccordés par une électrode principale à l'un ou l'autre des conducteurs de transmission de signaux (zi, zi'') du conducteur associé (zi) assorti de la matrice, et par deux transistors amont (Tpe, Tne), qui forment un circuit série respectivement avec un transistor interrupteur (Tpk, Tnk), et
qui sont respectivement raccordés par l'électrode de commande à un conducteur de transmission de signaux (sj) de la ligne associée d'entrée (sj) de la matrice et dont l'électrode principale respective, située à l'opposé du circuit série, est reliée, par l'intermédiaire d'un transistor d'exploration (Tna) prévu pour chaque élément de couplage, chaque ligne d'entrée de la matrice ou chaque ligne de sortie de la matrice, à une borne (U_{SS}, masse) de la source de tension de service, à l'autre borne (U_{DD}) de laquelle est connecté chaque conducteur de transmission de signaux (zi', zi'') de la ligne respective de sortie (zi) de la matrice respectivement par l'intermédiaire d'un transistor de précharge (Tpi', Tpi''), et
dans lequel les transistors de précharge (Tpi', Tpi'') et le transistor d'exploration (Tna) sont chargés, en des sens réciproquement opposés, respectivement au niveau de leur électrode de commande, par une cadence (T) de commande du champ de couplage, qui divise un intervalle de temps d'interconnexion de bits en une phase de précharge (pv) et en la phase d'interconnexion proprement dite (ph), de sorte que lorsque le transistor d'exploration (Tna) est bloqué, pendant chaque phase de précharge (pv), les deux conducteurs de transmission de signaux de la ligne de sortie (zi) de la matrice sont chargés par l'intermédiaire du transistor de précharge respectif (Tpi', Tpi''), au moins approximativement au potentiel qui règne sur ladite autre borne (U_{DD}) de la source de tension de service, et
dans lequel les deux transistors de précharge (Tpi', Tpi'') sont raccordés entre eux au niveau de leurs électrodes principales tournées vers la ligne respective de sortie (Zi) de la matrice, par l'intermédiaire d'un transistor transversal (Tpi'''), dont l'électrode de commande est connectée aux électrodes de commande des transistors de précharge (Tpi', Tpi''),
caractérisé par le fait que les couples (Kij) d'éléments de couplage possèdent chacun deux transistors amont (Tpe, Tne) possédant des types de canaux différents et qui sont raccordés, par leur électrode de commande, au même conducteur de transmission de signaux (sj) de la ligne associée d'entrée (sj) de la matrice.

2. Dispositif de couplage de signaux à large bande suivant la revendication 1, caractérisé par le fait que les couples (Aij) d'éléments de couplage possèdent chacun deux transistors formant interrupteurs (Tpk, Tnk) possédant des types de canaux différents et qui forment chacun un circuit série avec un transistor amont (Tpe, Tne) possédant le même type de canal.

3. Dispositif de couplage de signaux à large bande suivant la revendication 2, caractérisé par le fait que seulement dans une partie des couples (Kij) d'éléments de couplage, qui aboutissent à la même ligne de sortie (zi) de la matrice, le montage série des transistors (Tpe, Tpk) possédant un type de canal est connecté à un type de conducteur de transmission de signaux (zi'), et le montage série formé des transistors (Tne, Tnk) possédant l'autre type de canal est connecté à l'autre conducteur de transmission de signaux (zi'') de la ligne de sortie (zi) de la matrice, et dans l'autre partie des couples d'éléments de couplage aboutissant à la ligne de sortie considérée (zi) de la matrice, le montage série des transistors possédant ledit autre type de canal est connecté audit premier conducteur de transmission de signaux (zi') et le montage en série des transistors (Tnp, Tnk) possédant lesdits premiers types de canal est connecté audit conducteur de transmission de signaux (zi'') de la ligne de sortie (zi) de la matrice.

4. Dispositif de couplage de signaux à large bande suivant la revendication 3, caractérisé par le fait que des couples d'éléments de couplage, qui sont connectés d'une manière ou de l'autre au conducteur de transmission de signaux (zi', zi'') de la ligne de sortie associée de la matrice, se succèdent alternativement dans la rangée considérée de la matrice.

5. Dispositif de couplage de signaux à large bande suivant l'une des revendications 1 à 4, caractérisé par le fait qu'en dehors d'un transistor d'exploration (Tnaj) prévu pour chaque ligne d'entrée de la matrice, il est prévu un transistor de précharge (Tpaj) pour chaque ligne d'entrée de la matrice.

6. Dispositif de couplage de signaux à large bande suivant l'une des revendications 1 à 4, caractérisé par le fait qu'en dehors d'un transistor d'exploration (Tnai) prévu pour chaque ligne de sortie de la matrice, il est prévu un transistor de précharge (Tpai) pour chaque ligne de sortie de la matrice.
